# EUROPEAN PATENT APPLICATION

(11) **EP 4 234 365 A1**
(43) Date of publication of application: **30.08.2023**
(21) Application number: 22158175.4
(22) Date of filing: 23.02.2022
(51) Int. Cl.: B62D 5/09

(54) **HYDRAULIC STEERING ARRANGEMENT**

(71) Applicant: Danfoss Power Solutions ApS, 6430 Nordborg (DK)
(72) Inventor: Olsen, Palle, 6430 Nordborg (DK); Petersen, Morten Hoeck, 6430 Nordborg (DK)
(74) Representative: Keil & Schaafhausen Patentanwälte PartGmbB

(57) **Abstract**

A hydraulic steering arrangement (1) comprising a hydraulic steering unit (2) having a steering command input which is connected to a motor actuating the steering unit (2) is described.

Such a steering arrangement should provide a higher degree of freedom when constructing a vehicle.

To this end the motor is a hydraulic motor (6).

## Description

The present invention relates to hydraulic steering arrangement comprising a hydraulic steering unit having a steering command input which is connected to a motor actuating the steering unit.

Such a hydraulic steering arrangement is known, for example, from US 5 285 867 A.

The steering command input can be, for example, in form of a steering wheel. When the driver of a vehicle equipped with such a hydraulic steering arrangement rotates the steering wheel, the vehicle changes its direction of propulsion. The motor makes it possible to remotely control the hydraulic steering unit, so that it is not necessary that the driver actuates the steering wheel.

The motor is an electric motor. A problem with an electric motor is that it tends to develop high temperatures, so that it is not possible to place the electric motor anywhere because of the heat issue. If the electric motor is, for example, placed in or near the cabin of the driver, an air conditioning system is necessary to keep the temperature in the cabin at an acceptable level. Furthermore, the speedrange of an electric motor does not always match to the requirements of the steering, so that a gearbox is necessary, which produces costs. When the electric motor is operated at low voltages, high currents are necessary to produce the required torque. A high current requires large diameter wires.

The object underlying the invention is to have a higher degree of freedom when constructing a vehicle.

This object is solved with a hydraulic steering arrangement as described at the outset in that the motor is a hydraulic motor.

A hydraulic motor does not develop such high temperatures as an electric motor under the same conditions. Thus, the heat produced by the hydraulic motor is acceptable and does not disturb the driver. Accordingly, the motor and the steering unit can be placed more or less anywhere. A hydraulic motor can be operated at rotating speeds matching the requirements of the hydrauling steering, so that it is possible to avoid the use of a gear box.

In an embodiment of the invention the hydraulic motor is connected to an electric controller. The electric controller controls the operation of the hydraulic motor. Thus, it is possible to remotely control the operation of the hydraulic motor.

In an embodiment of the invention the electric controller comprises an electrohydraulic actuator. The electrohydraulic actuator is able to control the supply to the hydraulic motor from a pressure force.

In an embodiment of the invention the electrohydraulic actuator is in form of a proportional three position four-way solenoid valve. Such an electrohydraulic controller is available on the market, for example, in form of a proportional valve in which the flow of fluid is proportional to the displacement of a valve element of the controller.

In an embodiment of the invention the electrohydraulic actuator comprises four controlled valves arranged in a bridge having four branches arranged in a rectangle and two diagonals, wherein the hydraulic motor is connected to one diagonal of the bridge and a hydraulic fluid supply arrangement is connected to the other diagonal of the bridge. The bridge can be compared to a Wheatstone bridge known from an electric circuitry. The use of such a bridge simplifies the control of the hydraulic motor.

In an embodiment of the invention the electric controller is connected to a rotational sensor detecting an angle of rotation of the hydraulic motor. The signal of the rotational sensor can be fed back to the electric controller, so that the electric controller is able to determine whether the hydraulic motor has operated the hydraulic steering unit in the desired way.

In an embodiment of the invention the rotational sensor is arranged on a side of the hydraulic motor opposite the hydraulic steering unit. The rotational sensor is decoupled from the hydraulic steering unit, so that a negative influence of a hydraulic steering unit to a rotational sensor is avoided.

In an embodiment of the invention the hydraulic motor is a positive displacement motor. A positive displacement motor can be controlled very precisely. The amount of fluid supplied to the hydraulic motor determines the degree of rotation. It is possible, however, not necessary, that the hydraulic motor is rotated by more than 360°. Even fractions of a total revolution can be produced in order to perform smaller steering movements of the steering unit.

In an embodiment of the invention a hydraulic motor has a speed range from 0 to 150 rpm. The hydraulic motor can then be regulated between 0 and 150 rotations per minute.

In an embodiment of the invention the hydraulic motor and the hydraulic steering unit are arranged in a common block arrangement. This means that the hydraulic steering unit and the hydraulic motor form a unit which can be handled in a single piece. This facilitates the assembly of the hydraulic steering system.

In an embodiment of the invention the hydraulic steering unit comprises a measuring motor and a steering valve, wherein the hydraulic motor is connected to the steering valve. The steering valve can be, for example, in form of a set of spool and sleeve which are arranged in a bore of a housing. In this case, an output shaft of the hydraulic motor can be connected to the spool in the same way as a steering wheel has been connected to the sleeve.

In an embodiment of the invention the hydraulic motor is arranged at a side of the steering valve opposite the measuring motor. The hydraulic steering unit can be in a conventional form, the only difference being that the hydraulic motor is mounted to the side at which the steering valve is not connected to the measuring motor. Thus, known parts can be used for the hydraulic steering system.

In an alternative embodiment the hydraulic motor is arranged between the steering valve and the measuring motor.

In an embodiment of the invention the steering wheel is connected to the steering command input, wherein the steering wheel is mounted to the hydraulic motor or a part other than the hydraulic steering unit. In other words, the hydraulic steering unit is not directly operated by the steering wheel, but the steering wheel is connected to the hydraulic motor or to the rotational sensor.

In an embodiment of the invention the steering wheel is connected to an actuating sensor producing an actuating signal when the steering wheel is actuated, wherein the hydraulic motor is made pressureless upon production of the actuating signal. Thus, steering by means of the steering wheel has a priority over steering by means of the hydraulic motor. This is an advantage in emergency situations.

If there is a steering wheel it should be possible for the driver always to steer the vehicle as there is a mechanical connection directly from the steering wheel to the hydraulic steering unit. This could be done in a way that the torque from the steering wheel is greater that the torque from the pilot circuit or that the torque from the steering wheel could "activate" an overpressure valve in connection whit the hydraulic motor. In any way this leads to an inactive hydraulic motor by some kind of mechanical means.

Preferred embodiments of the invention will now be described with reference to the drawing, in which:
- Fig. 1: shows a schematic illustration of parts of a hydraulic steering arrangement,
- Fig. 2: shows a second embodiment of the invention,
- Fig. 3: shows a schematic illustration of a controller of the hydraulic motor, and
- Fig. 4: shows a block having a hydraulic steering unit, a hydraulic motor and a rotational sensor.

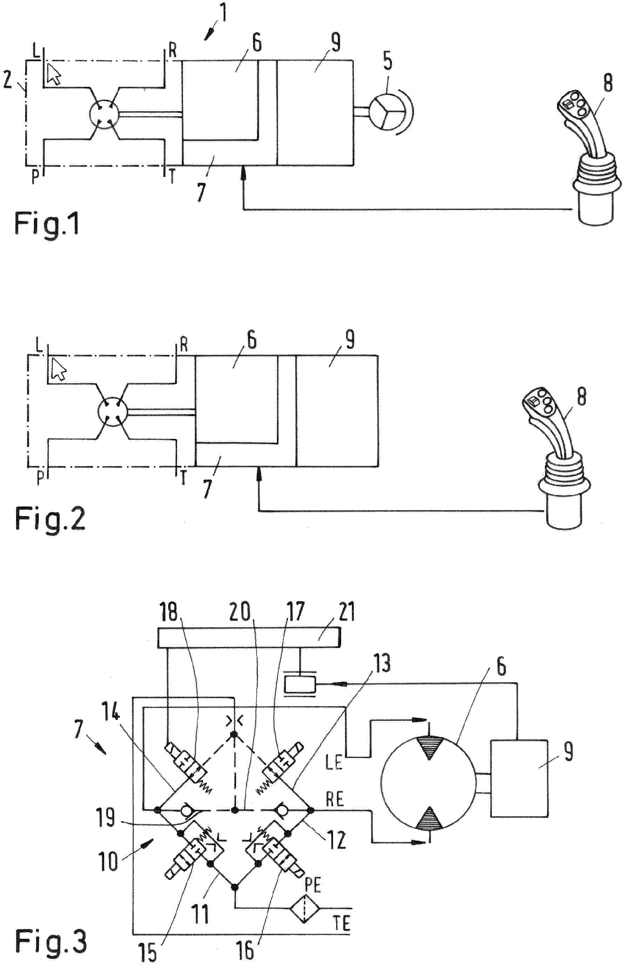

Fig. 1 shows schematically parts of a hydraulic steering arrangement 1. The hydraulic steering arrangement 1 comprises a hydraulic steering unit 2. The hydraulic steering unit 2 comprises a supply port arrangement having a supply port P and a return port T. Furthermore, the hydraulic steering unit 2 comprises a working port arrangement having two working ports L, R. In use, the two working ports L, R are connected to a steering motor, for example a steering cylinder of a vehicle equipped with the hydraulic steering arrangement.

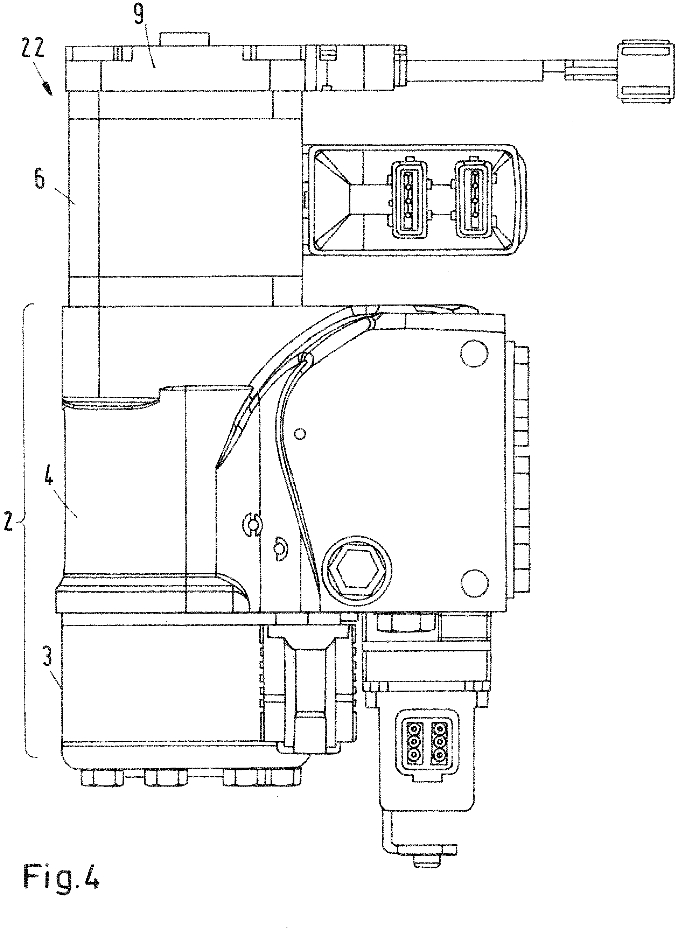

The hydraulic steering unit 2 controls a flow of hydraulic fluid from the supply port arrangement to the working port arrangement. The hydraulic steering unit 2 can be of conventional form having a measuring motor 3 (Fig. 4) and a steering valve 4. The steering valve 4 comprises a set of a spool and a sleeve surrounding the spool, wherein the set of spool and sleeve is arranged in a bore of a housing. When the vehicle should be steered, the spool is rotated with respect to the sleeve, so that some orifices open and other orifices close. Fluid from the steering valve 4 flows to the measuring motor 3 and drives the measuring motor 3. The measuring motor 3 is connected to the sleeve and rotates it back to a neutral position in relation to the spool once the necessary volume of hydraulic fluid has been delivered to one of the working ports.

Fig. 1 shows a steering wheel 5 which can be used for rotating the spool or more general for actuating the hydraulic steering unit 2.

In order to facilitate the rotation of the steering wheel 5 or in order to remotely control the hydraulic steering unit 2 a hydraulic motor 6 is arranged between the steering wheel 5 and the hydraulic steering unit 2. The hydraulic motor 6 is connected to an electric controller 7. The electric controller 7 controls the operation of the hydraulic motor 6 as it will be explained in connection with Fig. 3.

Since an electric controller is present, the hydraulic motor 6 can alternatively (Fig. 2) or additionally (Fig. 1) be operated by means of a joystick 8.

A rotational sensor 9 is connected to the hydraulic motor 6. In the present case, the rotational sensor 9 is arranged between the steering wheel 5 and the hydraulic motor 6. The rotational sensor 9 detects the angle of rotation of the hydraulic motor 6.

Fig. 3 shows an example of an electric controller which is in form of an electrohydraulic actuator, for example, in form of a proportional three position four-way solenoid valve.

The electric controller 7 comprises a bridge 10 of four branches 11-14. In each branch a solenoid controlled valve 15-18 is arranged. The hydraulic motor 6 is connected to one diagonal 19 of the bridge 10, while a fluid supply arrangement PE, TE is connected to the other diagonal 20 of the bridge 10.

The valves 15-18 can also be formed by means of a slider which is moved in a housing to open some orifices and close other orifices, as it is known in the art.

The hydraulic motor 6 is connected to the rotational sensor 9. The rotational sensor 9 is connected to an electronic controller 21 which controls the valves 15-18.

The electric controller 7 can be, for example, in form of a valve PVE of Danfoss Power Solutions ApS.

As mentioned above, the rotational sensor 9 feeds back the rotational angle of the hydraulic motor 6 to the control circuit 21, so that the control circuit 21 is able to control the rotational movement of the hydraulic motor 6 and in this way to control the steering motor which would otherwise be controlled by the steering wheel.

In a way not shown, the steering wheel 5 comprises or is connected to an actuating sensor which produces an actuating signal when the steering wheel 5 is actuated. This signal is sent to the control circuit 21 which in turn makes the hydraulic motor 6 pressureless as soon as the steering wheel is actuated. In this way, an emergency situation can be avoided. The steering by means of the steering wheel 5 has a higher priority than the steering by the hydraulic motor 6. The pressureless situation can be produced, for example, by opening an overpressure valve (not shown).

Another possibility is that the steering wheel 5 produces allways a higher torque than the hydraulic motor 6 which is controlled by the control circuit 21.

The hydraulic motor 6 is a positive displacement motor. In a positive displacement motor the rotation of the motor can be very precisely controlled. It depends basically on the amount of hydraulic fluid which is supplied to the hydraulic motor 6. In this way, it is possible to actuate the hydraulic steering unit 2 with a high degree of precision.

The hydraulic motor 6 has a speed range from 0 to 150 rotations per minute. The hydraulic motor 6 is designed for running at these rotational speeds. The hydraulic motor 6 can, for example, be a vane motor, a cam lope motor or a gearwheel motor.

Fig. 4 shows the hydraulic steering unit 2 and the hydraulic motor 6 mounted together in a common block arrangement 22 which forms a block which can be handled as a unit. The hydraulic motor 6 is directly flanged to the hydraulic steering unit 2. The hydraulic block arrangement 22 comprises also the rotational sensor 9.

The hydraulic motor 6 is connected to the steering valve 4, as shown. In an alternative embodiment the hydraulic motor 6 can also be arranged between the steering valve 4 and the measuring motor 3.

The output axle of the hydraulic motor 6 can be connected to the spline connection for the hydraulic steering unit 2, where the steering wheel 5 normally is mounted. The steering wheel 5 can be mounted on a spline connection of the rotational sensor 9 or of the hydraulic motor 6.

## Claims

1. Hydraulic steering arrangement (1) comprising a hydraulic steering unit (2) having a steering command input which is connected to a motor actuating the steering unit (2), **characterized in that** the motor is a hydraulic motor (6).

2. Hydraulic steering arrangement according to claim 1, **characterized in that** the hydraulic motor (6) is connected to an electric controller (7).

3. Hydraulic steering arrangement according to claim 2, **characterized in that** the electric controller (7) comprises an electrohydraulic actuator.

4. Hydraulic steering arrangement according to claim 3, **characterized in that** the electrohydraulic actuator is in form of a proportional three position four-way solenoid valve.

5. Hydraulic steering arrangement according to claim 3 or 4, **characterized in that** the electrohydraulic actuator comprises four controlled valves (15-18) arranged in a bridge (10) having four branches (11-14) arranged in a rectangle and two diagonals (19, 20), wherein the hydraulic motor (6) is connected to one diagonal (19) of the bridge (10) and a hydraulic fluid supply arrangement (PE, TE) is connected to the other diagonal (20) of the bridge (10).

6. Hydraulic steering arrangement according to claim 2 to 5, **characterized in that** the electric controller (7) is connected to a rotational sensor (9) detecting an angle of rotation of the hydraulic motor (6).

7. Hydraulic steering arrangement according to claim 6, **characterized in that** the rotational sensor (9) is arranged on a side of the hydraulic motor (6) opposite the hydraulic steering unit (2).

8. Hydraulic steering arrangement according to any of claims 1 to 7, **characterized in that** the hydraulic motor (6) is a positive displacement motor.

9. Hydraulic steering arrangement according to claim 8, **characterized in that** the hydraulic motor (6) has a speed range from 0 to 150 rpm.

10. Hydraulic steering arrangement according to any of claims 1 to 9, **characterized in that** the hydraulic motor (6) and the hydraulic steering unit (2) are arranged in a common block arrangement (22).

11. Hydraulic steering arrangement according to claim 10, **characterized in that** the hydraulic steering unit (2) comprises a measuring motor (3) and a steering valve (4), wherein the hydraulic motor (6) is connected to the steering valve (4).

12. Hydraulic steering arrangement according to claim 11, **characterized in that** the hydraulic motor (6) is arranged at a side of the steering valve (4) opposite the measuring motor (3).

13. Hydraulic steering arrangement according to claim 11, **characterized in that** the hydraulic motor (6) is arranged between the steering valve (4) and the measuring motor (3).

14. Hydraulic steering arrangement according to any of claims 1 to 13, **characterized in that** a steering wheel (5) is connected to the steering command input, wherein the steering wheel (5) is mounted to the hydraulic motor (6) or a part other than the hydraulic steering unit (2).

15. Hydraulic steering arrangement according to claim 14, **characterized in that** the steering wheel (5) is connected to an actuating sensor producing an actuating signal when the steering wheel (5) is actuated, wherein the hydraulic motor (6) is made pressureless upon production of the actuating signal.
